# FASCICULE DE BREVET EUROPEEN

(11) **EP 1 717 450 B1**
(45) Date de publication et mention de la délivrance du brevet: **23.01.2013**
(21) Numéro de dépôt: 06113168.6
(22) Date de dépôt: 26.04.2006
(51) Int. Cl.: F04D 29/56, F01D 17/16, F04D 29/02

(54) **Aube de stator à calage variable, procédé de réparation d'une aube**
Verstellbare Leitschaufel, Verfahren zur Reparatur einer Schaufel
Variable stator blade, method for repair of a blade

(30) Priorité: 28.04.2005 FR 0551112
(43) Date de publication de la demande: 02.11.2006
(73) Titulaire: SNECMA, 75015 Paris (FR)
(72) Inventeur: FOUCHER, Christelle, 35690, ACIGNE (FR)
(74) Mandataire: David, Daniel

(56) Documents cités:
- EP-A- 1 400 659
- EP-A- 1 482 129
- EP-A1- 1 439 308
- US-A- 2 957 228
- US-A- 5 039 277

## Description

La présente invention concerne le domaine des turbomachines et en particulier les aubes de stator à calage variable.

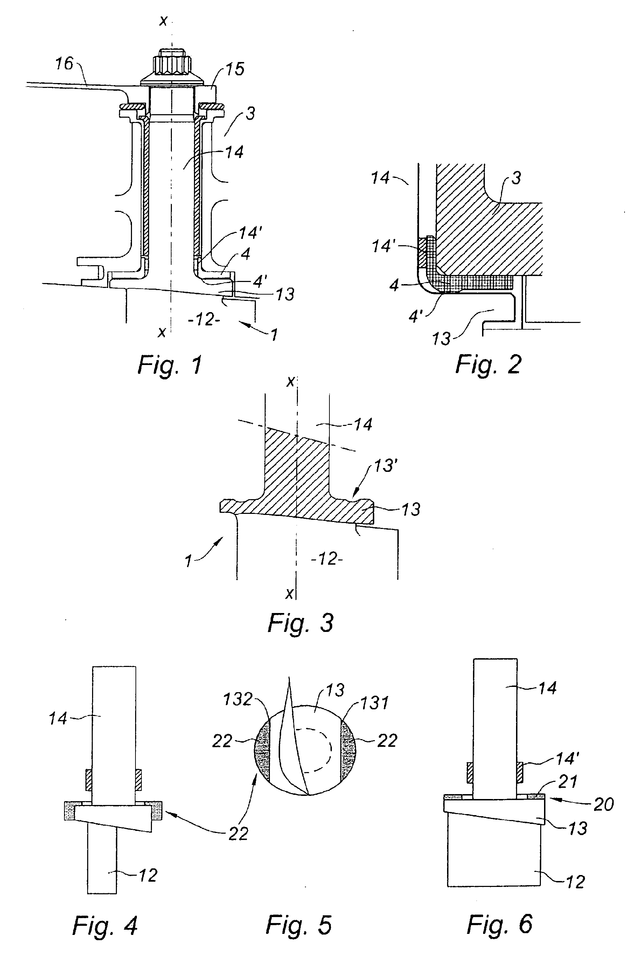

Un système articulé, comme les aubes de redresseur à calage variable d'un compresseur de moteur à turbine à gaz, comprend des pièces en mouvement relatif les unes par rapport aux autres. Sur les figures 1 et 2, on a représenté de façon schématique une aube 1 de redresseur à calage variable montée rotative dans le carter 3 de la machine. L'aube comprend une pale 12, une platine 13 et une tige formant pivot 14. Le pivot 14 est logé dans un alésage ou orifice radial ménagé dans le carter 3 par l'intermédiaire de différents paliers. Un des paliers est constitué d'une douille 4 en contact glissant avec la tige formant pivot 14, directement ou par l'intermédiaire d'une frette 14'. La douille 4 solidaire du carter dans le fond d'un lamage ménagé dans la paroi de ce dernier, est en contact avec la platine 13 par l'intermédiaire d'un bossage annulaire 4'. La face opposée de la platine 13 par rapport à la douille est balayée par les gaz de la veine. Une rondelle 15 maintient l'aube dans son logement. Un levier 16 ; lui-même actionné par des organes non représentés, commande la rotation de l'aube autour de l'axe XX de la tige pour mettre celle-ci dans la position requise par rapport au flux d'air balayant la pale. Les mouvements relatifs résultent du glissement des surfaces en contact, ici la tige et la platine avec les douilles. En fonctionnement du moteur, on constate que les sollicitations auxquelles les pièces sont soumises exposent les surfaces en contact à une usure qui peut conduire à des pertes de fonctionnalité du système.

Dans le cas du montage présenté ci-dessus, on constate qu'une usure se produit sur la platine au niveau du bossage annulaire 4'. La zone usée commence par prendre la forme d'une rainure puis elle s'étend sur toute la platine. On a représenté sur la figure 3 une aube ainsi usée. On observe que la platine 13 est creusée en 13'.

Actuellement, il n'existe aucune solution satisfaisante de réparation de ces aubes

On connaît US 5,039,277 qui porte sur une aube avec une platine formée d'une pièce avec la pale et une plateforme rapportée.

La demanderesse s'est fixé comme objectif la mise au point d'une solution de réparation qui soit de mise en oeuvre simple.

La solution de l'invention doit aussi pouvoir être mise en oeuvre sur des aubes neuves avant leur mise en service afin de prévenir l'usure de la pièce. La solution doit donc aussi permettre une réduction de l'usure des platines et espacer les opérations périodiques de maintenance.

Conformément à l'invention, on fournit une aube de stator à calage variable, logée dans un carter de turbomachine, comportant une pale, une platine assurant la continuité de la paroi du carter et un pivot, comprenant une plateforme avec un disque rapporté par une face sur la platine et venant en appui par l'autre face contre la paroi du carter, la plateforme rapportée étant immobilisée en rotation par rapport à l'axe du pivot et au moins une patte anti-rotation solidaire du disque coopérant avec une surface complémentaire ménagée sur la platine, un moyen de centrage de la plateforme par rapport à l'axe du pivot étant ménagé entre la platine et la plateforme.

Par exemple, la patte comprend une portion de surface plane, parallèle ou inclinée par rapport à l'axe du pivot, coopérant avec une surface complémentaire de la platine.

Conformément à une autre caractéristique, le moyen de centrage est constitué par un redan annulaire usiné à la périphérie de la platine coopérant avec un redan annulaire ménagé sur la surface intérieure de la plateforme. Il peut aussi être formé par une collerette à la périphérie de la plateforme coopérant avec le bord de la platine, si l'espace entre la platine et le lamage du carter le permet. Ces deux moyens sont présentés à titre d'exemple d'autres moyens sont possibles.

Conformément à une autre caractéristique, le pivot comprenant une frette annulaire formant palier, la plateforme rapportée présente une ouverture centrale suffisamment large pour permettre le passage de la plateforme le long du pivot et le long de l'ensemble pivot et frette.

Conformément à une autre caractéristique, la surface de la plateforme venant au contact du carter présente un artifice de surface, une dureté, adaptée. En particulier la surface comprend un revêtement de type carbure de tungstène ou autre équivalent, une céramique de type alumine ou zircone brasée en un ou plusieurs secteurs ou encore une céramique de type alumine frettée ou bien encore la surface a subi un traitement de surface de type grenaillage, galetage ou autre, ou encore le matériau de la plate-forme est un alliage pour boulonnerie (ex : alliages de base nickel écrouis) ou pour roulements (ex : aciers de dureté très élevée) choisi pour ses bonnes propriétés de frottement afin de minimiser l'usure plateforme/douille.

On décrit maintenant différents modes de réalisation de l'invention en référence aux dessins annexés, sur lesquels :
- la figure 1 montre schématiquement une partie d'une aube de stator à calage variable vue en coupe parallèle à l'axe du moteur, montée dans le carter du compresseur,
- la figure est une vue agrandie de la zone de contact de la platine avec la douille de carter,
- la figure 3 montre une aube de stator seule avec une trace d'usure,
- les figures 4 à 6 montrent schématiquement une aube de stator vue respectivement de face, de profil et de dessus équipée d'une plateforme de l'invention,
- les figures 7 et 8 montrent une variante de réalisation de la plateforme rapportée sur la platine de l'aube vue de face et de profil,
- les figure 9 à 11 montrent une aube de stator, vue respectivement de face, de profil et de dessus équipée d'une plateforme selon une autre variante de réalisation,
- les figures 12 et 13 montrent une aube de stator, vue de profil et de dessus, équipée d'une plateforme selon une autre variante de réalisation de l'invention,
- la figure 14 montre une vue partielle d'une aube de stator à calage variable avant réparation.

L'aube de stator est représentée schématiquement. Elle comprend successivement une pale 12 balayé par les gaz, une platine 13 assurant la continuité de la paroi du carter enveloppant la veine de gaz et un pivot 14 autour de l'axe duquel l'aube est commandée en rotation. L'aube comprend également selon ce mode de réalisation une frette formant palier pour le pivot. Conforment à l'invention, selon le mode de réalisation des figures 4 à 6, on a mis en place une plateforme 20 sur la face de la platine tournée vers l'axe de pivot. La plateforme 20 comprend une première partie 21 en forme de disque dont le diamètre extérieur est égal ici à celui de la platine 13. Ce disque se prolonge du côté de la pale par deux pattes 22 dites anti-rotation qui coopèrent avec deux surfaces complémentaires telles que des méplats 131 et 132 usinées latéralement dans la platine 13, parallèlement ou en étant inclinées selon l'axe XX du pivot. On observe que le disque 21 comprend une ouverture centrale de diamètre suffisant pour permettre son passage le long du pivot au delà de la frette 14'.

La plateforme 20, rapportée, constitue un moyen simple et efficace de protéger la platine 13 contre l'usure produite par le frottement de la douille 4. Lorsque l'aube est en place, le bossage 4' de la douille 4 vient en appui contre la plateforme et non directement contre la platine. La plateforme est bloquée en rotation par les deux pattes 22 perpendiculaires ou inclinées par rapport au disque 21, qui sont en appui contre les surfaces 131 et 132. Elle peut être mise en place en la glissant le long du pivot 14, sans avoir à démonter la frette de ce dernier.

Un avantage de la solution est de permettre le contrôle visuel de l'état de surface de la zone située à la racine du pivot par rapport à la platine en ne la masquant pas. Cette zone est le siège de criques, son contrôle doit pouvoir être fait aisément.

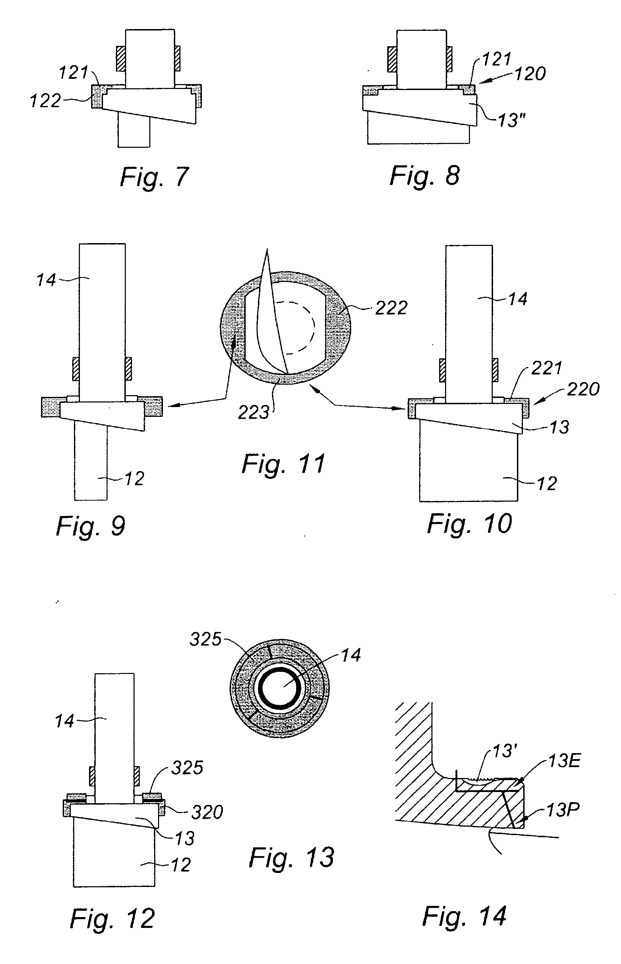

Les figures 7 et 8 montrent une variante de la solution où l'on a usiné un redan annulaire 13" sur la platine. Le profil de ce redan est complémentaire de celui creusé dans la plateforme 20'. La fonction de ce redan est d'assurer le centrage de la plateforme par rapport à l'axe de l'aube.

La variante selon les figures 9, 10 et 11 montre une plateforme 220 qui comprend une partie plane en forme de disque 221 et deux pattes 222 comme dans la réalisation des figures précédentes. L'ensemble est bordé d'une collerette 223 qui en recouvrant le diamètre extérieur de la platine assure à la fois le centrage de la plateforme et la protection du bord de la platine en cas de contact avec le lamage du carter. Cette solution est à envisager dans le cas où le jeu entre le lamage du carter, constituant le logement de la platine, et la platine du redresseur est suffisant.

Le montage de la plateforme se fait lorsque l'aube de stator est elle-même démontée du carter. La plateforme peut être simplement posée sur la platine ; cependant on prévoit selon une variante de frotter la plateforme par les pattes anti-rotation sur la platine lorsqu'une immobilisation en direction axiale est souhaitable.

Lors de l'usinage des méplats formant le logement des pattes anti-rotation ou des moyens de centrage, il faut éviter les angles vifs. On adopte de préférence des angles chanfreinés ou rayonnés afin d'éviter les départs de fissurations.

Conformément à une autre caractéristique, la plateforme rapportée présente un artifice de surface destiné à allonger la durée de vie de la zone de contact.

Selon un mode de réalisation, on adjoint un revêtement de type carbure de tungstène à la surface venant au contact de la douille. La plateforme est par exemple un alliage tel que le Z6NCT25 et la surface formée par projection HVOF de l'alliage WC/17%Co. La douille en vis-à-vis est alors un alliage à base de fer tel que le Z12CNDV12 revêtu de carbure de tungstène.

Selon un autre mode de réalisation, on renforce la dureté par un traitement de surface approprié, tel que le grenaillage à Ultrason ou le galetage appliqué sur un alliage à base Z6NCT25 par exemple. Un vernis est avantageusement ajouté pour favoriser le rodage et la non usure du contact. Dans ce cas on utilise en vis-à-vis une douille de carter métallique telle que par exemple l'alliage Z12CNDV12.

Selon un autre mode de réalisation, on brase une céramique sur la surface de la plateforme 320, de type alumine de préférence en un ou plusieurs secteurs de rondelles 325, comme on le voit sur les figures 12 et 13. Selon le mode de réalisation représenté, la rondelle céramique est brasée en 3 secteurs sur la plateforme qui peut être un alliage de base fer, nickel ou cobalt, par exemple Z6NCT25. On utilise alors une douille de carter en Z12CNDV12.

Selon une variante de cette réalisation non représentée, le matériau céramique, zircone ou alumine, est en forme de rondelle frettée sur la plateforme en alliage métallique de base Fe, Ni, Co ou Ti, par exemple en Z6NCT25. Dans ce cas, on usine une contre forme à la surface de la platine pour contenir la rondelle par le frottage.

Une autre solution consiste à ajouter une collerette de maintien entourant à la fois la platine et la rondelle à frotter. La douille montée sur le carter, en vis-à-vis, de la platine est alors avantageusement métallique, de base fer, nickel ou cobalt, Z12CNDV12 par exemple.

Une dernière solution consiste à usiner la plate-forme dans un matériau de type alliage pour boulonnerie (ex : alliages de base nickel écrouis) ou pour roulements (ex : aciers de dureté très élevée). Ces matériaux sont choisis pour leurs bonnes propriétés de frottement qui permettront ainsi de minimiser les usures plateforme/douille.

On décrit maintenant une méthode de réparation d'une aube de redresseur qui n'a pas bénéficié de la solution de protection selon l'invention. Il s'agit dans ce cas de reconstituer une surface de contact de la platine endommagée.

Sur la figure 14, on a représenté une partie d'une platine de redresseur présentant une zone usée 13'. On procède dans un premier temps à un usinage selon une direction parallèle au plan de la platine 13 de manière à enlever une épaisseur 13E, suffisante pour rendre la platine plane. On usine également le bord de la platine de manière à enlever une partie 13P pour former un méplat et permettre la mise en place d'une patte anti-rotation. Ce méplat 131 ou 132 n'est pas aligné avec la pale de l'aube. De préférence on usine deux méplats parallèles entre eux.

La platine ainsi usinée est ensuite équipée d'une plateforme conforme à l'invention. Le disque de la plateforme vient occuper l'espace annulaire dégagé par l'usinage sur la platine, et les deux pattes anti-rotation sont glissées le long des méplats aménagés. L'aube ainsi équipée est ensuite remontée dans le carter.

Dans le cas des aubes le plus fortement usées, si les usures sont plus profondes que la zone de reprise prévue, la réparation par ajout de plateforme reste quand même possible dans la mesure où la durée de vie de l'aube n'est pas remise en cause. La plateforme recouvre alors une zone usée non entièrement éliminée.

## Revendications

1. Aube de stator à calage variable, logée dans un carter de turbomachine, comportant une pale (12), une platine (13) assurant la continuité de la paroi du carter et un pivot (14), comprenant une plateforme (20) avec un disque (21) rapporté par une face sur la platine et venant en appui par l'autre face contre la paroi (4) du carter, la plateforme (20) rapportée étant immobilisée en rotation par rapport à l'axe du pivot (14) et au moins une patte (22) anti-rotation solidaire du disque (21) coopérant avec une surface (131, 132) complémentaire ménagée sur la platine (13), **caractérisée par le fait qu'**un moyen de centrage de la plateforme (20) par rapport à l'axe du pivot (14) est ménagé entre la platine (13) et la plateforme (20).

2. Aube selon la revendication 1 dont la patte (22) comprend une portion de surface, plane, saillant par rapport au plan du disque et parallèle à l'axe du pivot (14), coopérant avec une surface (131, 132) de la platine (13).

3. Aube selon la revendication 1 dont le moyen de centrage est constitué par un redan annulaire (13") usiné à la périphérie de la platine (13) coopérant avec un redan annulaire ménagé sur la surface intérieure de la plateforme (120).

4. Aube selon la revendication 1 dont le moyen de centrage est formé par une collerette (223) à la périphérie de la plateforme coopérant avec le bord de la platine.

5. Aube selon l'une des revendications précédentes, le pivot comprenant une frette (14') annulaire formant palier, dont le disque (21) de la plateforme (20) présente une ouverture centrale suffisamment large pour permettre le passage de la plateforme le long du pivot.

6. Aube selon l'une des revendications précédentes dont la surface de la plateforme venant au contact du carter comprend un artifice de surface destiné à allonger la durée de vie de la zone de contact avec le carter.

7. Aube selon la revendication 6 dont ledit artifice est constitué par un revêtement de type carbure de tungstène ou autre équivalent, un traitement de surface de type grenaillage, galetage ou autre, une céramique de type alumine brasée en un ou plusieurs secteurs ou encore une céramique de type alumine frettée ou est en alliage pour boulonnerie tel qu'un alliage de base nickel écroui ou pour roulements tel qu'un acier de dureté très élevée.

8. Turbomachine comprenant au moins un étage de redresseur constitué d'aubes pivotant dans un carter, les dites aubes étant pourvues d'une plateforme selon l'une des revendications 1 à 7 coopérant avec une douille (4) montée dans un lamage du carter.

9. Procédé de réparation d'une aube de redresseur, dont la platine (13) présente une usure (13') résultant du frottement avec une douille (4) rapportée, consistant à usiner la partie usée de la platine puis à y rapporter une plateforme de manière à obtenir une aube selon l'une des revendications 1 à 7.

## Claims

1. Variable-setting stator blade, housed in a turbomachine casing, comprising an aerofoil (12), a plate (13) and a pivot (14), comprising a platform (20) with a disc (21) on one face fitted to the plate and on the other face pressing against the wall (4) of the casing, the fitted platform (20) being prevented from rotating relative to the axis of the pivot (14) and at least one anti-rotation tab (22) fixedly attached to the disc (21) interacting with a matching surface (131, 132) made on the plate (13), **characterized in that** a means of centring the platform (20) relative to the axis of the pivot (14) is made between the plate (13) and the platform (20).

2. Blade according to Claim 1, whereof the tab (22) comprises a flat surface portion, protruding relative to the plane of the disc and parallel to the axis of the pivot (14), interacting with a surface (131, 132) of the plate (13).

3. Blade according to Claim 1, whereof the centring means consists of an annular step (13") machined on the periphery of the plate (13) interacting with an annular step made on the inner surface of the platform (120).

4. Blade according to Claim 1, whereof the centring means is formed by a collar (223) on the periphery of the platform interacting with the edge of the plate.

5. Blade according to one of the preceding claims, the pivot comprising an annular shrink-fitted band (14') forming a bearing, whereof the disc (21) of the platform (20) has a central opening sufficiently wide to allow the platform to pass along the pivot.

6. Blade according to one of the preceding claims, whereof the surface of the platform coming into contact with the casing comprises a surface artifice intended to lengthen the lifetime of the zone of contact with the casing.

7. Blade according to Claim 6, whereof the said artifice consists of a coating of the tungsten carbide or other equivalent type, or a surface treatment of the shot-blasting, roller-burnishing or other type, a brazed ceramic of the alumina type in the form of one or more sectors, or else a shrink-fitted ceramic of the alumina type, or else is made of an alloy used for threaded fasteners such as a cold-rolled nickel-based alloy or for bearings such as an extremely hard steel.

8. Turbomachine comprising at least one stator stage consisting of blades pivoting in a casing, the said blades being provided with a platform according to one of Claims 1 to 7 interacting with a bush (4) mounted on a facing of the casing.

9. Method of repairing a stator blade, whereof the plate (13) has wear (13') resulting from friction with a fitted bush (4), consisting in machining the worn part of the plate then fitting thereto a platform in order to obtain a blade according to one of Claims 1 to 7.

## Patentansprüche

1. Statorschaufel mit variabler Anstellung, angeordnet in einem Turbomaschinengehäuse, umfassend ein Rotorblatt (12), eine Platine (13), die die Kontinuität der Wand des Gehäuses gewährleistet, und einen Zapfen (14), umfassend eine Plattform (20) mit einer Scheibe (21), die mit einer Seite auf die Platine aufgesetzt ist und mit der anderen Seite an der Wand (4) des Gehäuses aufliegt, wobei die aufgesetzte Plattform (20) in Drehung in Bezug zur Achse des Zapfens (14) festgestellt ist, und mindestens eine Gegendrehungsklemme (22), die mit der Scheibe (21) verbunden ist, die mit einer komplementären Fläche (131, 132) zusammenwirkt, die auf der Platine (13) vorgesehen ist, **dadurch gekennzeichnet, dass** ein Mittel zum Zentrieren der Plattform (20) in Bezug zur Achse des Zapfens (14) zwischen der Platine (13) und der Plattform (20) vorgesehen ist.

2. Schaufel nach Anspruch 1, deren Klemme (22) einen flachen Oberflächenabschnitt umfasst, der in Bezug zur Ebene der Scheibe vorspringend und zur Achse des Zapfens (14) parallel ist und mit einer Fläche (131, 132) der Platine (13) zusammenwirkt.

3. Schaufel nach Anspruch 1, deren Zentriermittel von einem ringförmigen Absatz (13") gebildet ist, der an der Peripherie der Platine (13) vorgesehen ist und mit einem ringförmigen Absatz zusammenwirkt, der auf der Innenseite der Plattform (120) vorgesehen ist.

4. Schaufel nach Anspruch 1, deren Zentriermittel von einem Kragen (223) an der Peripherie der Plattform gebildet ist, der mit dem Rand der Platine zusammenwirkt.

5. Schaufel nach einem der vorhergehenden Ansprüche, wobei der Zapfen eine ringförmige Zwinge (14`), die ein Lager bildet, umfasst, wobei die Scheibe (21) der Plattform (20) eine zentrale Öffnung aufweist, die groß genug ist, um das Durchlaufen der Plattform entlang des Zapfes zu ermöglichen.

6. Schaufel nach einem der vorhergehenden Ansprüche, deren Oberfläche der Plattform, die mit dem Gehäuse in Kontakt kommt, eine Oberflächenschicht umfasst, die dazu bestimmt ist, die Lebensdauer der Kontaktzone mit dem Gehäuse zu verlängern.

7. Schaufel nach Anspruch 6, deren Oberflächenschicht von einer Verkleidung des Typs Wolframkarbid oder eines sonstigen Äquivalents, einer Oberflächenbearbeitung des Typs Kugelstrahlen, Glattwalzen oder dergleichen, einer Keramik des Typs eines in einem oder mehreren Sektoren gelöteten Aluminiumoxids oder einer Keramik des Typs bandagiertes Aluminiumoxid oder einer Legierung für Schrauben, wie einer Legierung auf Basis von Hartnickel, oder für Rollenlager, wie einem Stahl von sehr großer Härte, gebildet ist.

8. Turbomaschine, umfassend mindestens eine Gleichrichterstufe, die von Schaufeln, die in einem Gehäuse schwenken, gebildet ist, wobei die Schaufeln mit einer Plattform nach einem der Ansprüche 1 bis 7 versehen sind, die mit einer Büchse (4) zusammenwirkt, die in einer Senkung des Gehäuses vorgesehen ist.

9. Verfahren zur Reparatur einer Gleichrichterschaufel, deren Platine (13) einen Verschleiß (13`) aufweist, der von der Reibung mit der aufgesetzten Büchse (4) stammt, darin bestehen, den abgenutzten Teil der Platine zu bearbeiten, dann auf diesen eine Plattform aufzusetzen, um eine Schaufel nach einem der Ansprüche 1 bis 7 zu erhalten.
